# EUROPEAN PATENT APPLICATION

(11) **EP 4 830 995 A1**
(43) Date of publication of application: **28.10.2026**
(21) Application number: 24909889.8
(22) Date of filing: 23.08.2024
(51) Int. Cl.: B60N 2/30

(54) **SEAT AND TERMINAL**

(30) Priority: 25.12.2023 CN 202323572854 U
(71) Applicant: Yinwang Intelligent Technologies Co., Ltd., Shenzhen, Guangdong 518110 (CN)
(72) Inventor: XU, Hao, Shenzhen, Guangdong 518129 (CN); SHI, Hao, Shenzhen, Guangdong 518129 (CN); ZHU, Xin, Shenzhen, Guangdong 518129 (CN)
(74) Representative: Henselmann, Alexander Gerhard
(86) International application number: PCT/CN2024/114073
(87) International publication number: WO 2025/138939

(57) **Abstract**

A seat and a terminal are provided, and are applied to the technical field of seat accessories. The seat includes a side panel. The side panel includes a first side panel and a second side panel. The first side panel is slidably connected to the second side panel. The first side panel and the second side panel are capable of approaching each other or moving away from each other in a first direction. The first direction is a direction from a rear side to a front side of the seat. In this application, the side panel is provided as a split structure. When the seat is in a folded state, the first side panel and the second side panel in the side panel are away from each other, so that an accommodation space that can accommodate a side bolster of a backrest exists between the first side panel and the second side panel, thereby resolving a problem that when the seat is folded, the side bolster of the backrest severely interferes with the side panel and the side panel obstructs forward folding of the backrest.

## Description

This application claims priority to Chinese Patent Application No. 202323572854.0, filed with the China National Intellectual Property Administration on December 25, 2023, and entitled "SEAT AND TERMINAL", which is incorporated herein by reference in its entirety.

### TECHNICAL FIELD

This application relates to the technical field of seat accessories, and in particular, to a seat and a terminal.

### BACKGROUND

In a passenger vehicle, a position and a posture of a seat may be adjusted, to improve seating experience of the vehicle. Generally, the seat in the vehicle may include an unfolded state and a folded state, and different postures may provide different effect. For example, when a rear seat is in the folded state, a larger cargo space may be provided, or when a front seat is in the folded state, a front seating space is connected to the rear seat, thereby providing a larger seating space for a rear passenger. For a two-door four-seat vehicle, space is constrained, and when the front seat is in the folded state, a passageway may be provided for the passenger to access the rear seat.

However, a current seat folding function is not ideal. A backrest of the seat of the vehicle in the current industry is designed with an ergonomically contoured shape, to provide the passenger with a sense of enclosure and lumbar support during seating. For example, a forward-protruding bulge is provided at a lumbar region of the backrest to support the passenger's lower back. For another example, side bolsters or wing-shaped protrusions may extend from both sides of the backrest of the seat to enhance the sense of enclosure provided by the seat. However, when the seat tilts forward or is folded, the design intended to enhance the sense of support and enclosure for the passenger during seating severely interferes with side panels disposed on both sides of the seat. As a result, the side panels obstruct forward folding of the backrest of the seat, and the seat cannot be fully laid flat.

### SUMMARY

This application provides a seat and a terminal, to prevent a side panel from obstructing forward folding of a backrest of the seat and increase a foldable angle of the seat.

According to a first aspect, this application provides a seat. The seat includes a side panel. The side panel includes a first side panel and a second side panel. The first side panel matches the second side panel. The first side panel and the second side panel are capable of approaching each other or moving away from each other in a first direction. The first direction is a direction from a rear side to a front side of the seat. Through the foregoing configuration, when the first side panel and the second side panel move away from each other, after the second side panel moves away from the first side panel in the first direction, a portion of space can be released on a rear side of a seat base. The portion of space can accommodate a lumbar region of a backrest of the seat when the backrest is folded, to prevent the side panel from obstructing forward folding of the backrest of the seat and increase a foldable angle of the seat, thereby reducing a seat flattening angle, increasing available space, and enabling greater versatility in seat usage. In addition, increasing the foldable angle of the seat can further reduce a minimum occupied volume of the seat, and reduce costs in processes such as packaging, warehousing, and transportation and installation of the seat.

In addition, in this application, the two separately disposed side panels cooperate to form the side panel, so that the side panel may be combined after the two smaller side panels are separately processed during manufacturing, rather than directly integrally processing as a large assembly, thereby reducing processing costs of the side panel assembly. Particularly in some solutions in which some buttons, trim strips, and the like need to be designed on the side panel, the two separately disposed side panels can allow for greater flexibility in design and manufacturing operations without affecting cooperating surfaces of the two side panels, which helps reduce complexity of seat design and processing.

The matching may be understood as that contact portions of the first side panel and the second side panel are well-aligned. When the seat is unfolded, the first side panel and the second side panel may be spliced into a whole, and when the seat is folded, the first side panel and the second side panel may be split into two parts. In some solutions, there is a connection relationship between the first side panel and the second side panel. For example, the connection relationship between the first side panel and the second side panel includes a detachable connection. The detachable connection includes but is not limited to: The first side panel and the second side panel are connected through a fastener or are slidably connected through a sliding mechanism. The connection relationship herein may be a direct connection or an indirect connection. In some other solutions, there is no connection relationship between the first side panel and the second side panel. Instead, a whole is formed through splicing.

In a possible implementation of the first aspect, the first side panel is provided with a first accommodating portion, and when the seat is in an unfolded state, at least a portion of the second side panel is accommodated in the first accommodating portion. When the seat is in a folded state, at least a portion of the second side panel is detached from the first accommodating portion. The first accommodating portion may also be configured to accommodate the backrest of the seat/or a part of the backrest of the seat, for example, a side bolster of the backrest, to prevent interference during seat folding and ensure that the side panels of the seat match to form a whole when approaching each other, to cover a framework inside the seat and side foam, thereby improving aesthetics of the seat.

In another possible implementation of the first aspect, the first side panel is further provided with a second accommodating portion, and the first accommodating portion and the second accommodating portion are sequentially arranged in the first direction. A depth of the second accommodating portion is greater than a depth of the first accommodating portion in a second direction. The second direction is a direction from top to bottom of the seat. When the seat is in the folded state, at least a portion of the second side panel is accommodated in the second accommodating portion. The depth of the second accommodating portion is greater than the depth of the first accommodating portion, so that a position of the second accommodating portion is lower than that of the first accommodating portion. In this case, the second side panel may move forward and move downward, so that more space is reserved for the backrest of the seat, and no interference exists between the seat backrest and the seat. In addition, movement in the two directions further enables the two side panels to match into a whole after moving away from each other, to cover a framework inside the seat and side foam, thereby improving aesthetics of the seat.

In still another possible implementation of the first aspect, the seat further includes a seat body, and the side panel is disposed on one side of the seat body.

The seat body includes a first body and a second body, and the first body is slidably connected to the second body. The first body and the second body are capable of approaching each other or moving away from each other in the first direction. The first side panel is fastened to the first body. The second side panel is fastened to the second body. In this way, the second body drives movement of the second side panel, to increase a foldable angle of the seat, thereby reserving a larger placement space for the backrest of the seat.

In still another possible implementation of the first aspect, the seat further includes a seat cushion and the backrest. The backrest is rotatably connected to the first body, and the seat cushion is fastened to the second body. When the first body and the second body approach each other or move away from each other, the seat cushion moves together with the second body.

In still another possible implementation of the first aspect, the first body is provided with a slot mechanism, and the second body is provided with a rail. Alternatively, the first body is provided with a rail, and the second body is provided with a slot mechanism.

An extension direction of the slot mechanism is parallel to the first direction; and the rail is slidably connected to the slot mechanism. Through cooperation between the slot mechanism and the rail, the first body and the second body respectively drive the first side panel and the second side panel to move relative to or away from each other, thereby implementing no interference between the seat backrest and the seat.

In still another possible implementation of the first aspect, at least a portion of the slot mechanism extends downward in an inclined manner in the first direction. In some solutions, the depth of the second accommodating portion is greater than the depth of the first accommodating portion. Downward inclination of the slot mechanism may drive the second side panel to smoothly enter the second accommodating portion, thereby further increasing a foldable angle of the seat.

In still another possible implementation of the first aspect, the slot mechanism includes a first portion and a second portion. The first portion and the second portion are sequentially arranged in the first direction. An extension direction of the first portion is parallel to the first direction, and the second portion extends downward in an inclined manner in the first direction. In the foregoing implementation, the first portion corresponds to the first accommodating portion, and the second portion corresponds to the second accommodating portion. Because in some solutions, the depth of the second accommodating portion is greater than that of the first accommodating portion, tilting the second portion can guide the second side panel to enter the second accommodating portion.

In still another possible implementation of the first aspect, the first accommodating portion includes a first side wall and a first bottom wall, and the second side panel includes a first surface and a second surface. When the seat is in the unfolded state, the first surface is in contact with the first bottom wall, the second surface faces the first side wall, and the second surface is parallel to the first side wall. The first surface and the first bottom wall are in surface contact, so that the second side panel is stably connected to the first side panel. This can prevent the second side panel from shaking, increase structural compactness of the side panel, reduce a volume of the side panel, minimize space occupied by the side panel, and help save space. The second surface and the first side wall are parallel to each other, so that a gap between the second surface and the first side wall may be minimal or even eliminated, thereby further improving structural compactness of the side panel, reducing a volume, and saving space. This ensures a matching degree between the first side panel and the second side panel when the seat is in the unfolded state, resulting in good aesthetics.

In still another possible implementation of the first aspect, when the seat is in the folded state, at least a portion of a side bolster of a backrest of the seat is located within the first accommodating portion. This avoids interference between the side panel and the side bolster of the seat, and avoids affecting a forward tilt angle of the side bolster, thereby further increasing a foldable angle of the seat.

In still another possible implementation of the first aspect, a lower side surface of the side bolster of the backrest faces a first side wall of the first accommodating portion, and the lower side surface of the side bolster is parallel to the first side wall. The lower side surface and the first side wall are parallel to each other, so that a gap between the lower side surface and the first side wall may be minimal or even eliminated, thereby further avoiding mutual interference between the side panel and the side bolster of the seat, and avoiding affecting a forward tilt angle of the side bolster to save space.

In still another possible implementation of the first aspect, when the seat is in the folded state, the second surface faces a second side wall of the second accommodating portion, and the second surface is parallel to the second side wall. The second surface and the second side wall are parallel to each other, so that a gap between the second surface and the first side wall may be minimal or even eliminated, thereby further improving structural compactness of the side panel, reducing a volume, and saving space. This ensures a matching degree between the first side panel and the second side panel when the seat is in the folded state, resulting in good aesthetics. In the folded state, a compact structure of the side panel contributes to space savings, allowing accommodation of the backrest and enabling a greater folding angle of the backrest.

In still another possible implementation of the first aspect, when the seat is in the folded state, an included angle between a back of the backrest of the seat and a horizontal plane is between +20° and -20°. In some solutions, 0° is an angle of the horizontal plane, with an unfolding direction of the backrest of the seat as a positive angle and a folding direction of the backrest of the seat as a negative angle. For example, an included angle between the back of the backrest of the seat and the horizontal plane is +18°, +15°, +10°, or the like.

It can be learned that in this implementation of this application, the backrest of the seat can be highly folded, so that a user can use more space within the vehicle, thereby improving use experience.

In still another possible implementation of the first aspect, the seat further includes a leg support, and the leg support is connected to a side that is of a seat cushion and that is away from the backrest. The leg support includes a support state and a retracted state. When the leg support is in the retracted state, an included angle between the leg support and the seat cushion is a first included angle. When the leg support is in the support state, an included angle between the leg support and the seat cushion is a second included angle. The first included angle is less than the second included angle. The seat cushion may move downward in an inclined manner in the first direction together with the second body, causing the leg support to also move downward in an inclined manner in the first direction following the seat cushion. As a result, during movement of the seat cushion, the seat cushion may abut against the vehicle floor or ground, causing the second body to fail to continue moving or causing damage to the seat cushion. The foregoing situations may be avoided by configuring the leg support with a support state and a retracted state.

A second aspect of embodiments of this application provides a terminal, including the seat according to any implementation of the first aspect. Optionally, the terminal includes a transport or transportation means such as a vehicle, a transport robot, or a ship. Alternatively, optionally, the terminal includes an intelligent device including a seat, such as an electric sofa, a 4D cinema cockpit, or a massage chair.

### BRIEF DESCRIPTION OF DRAWINGS

FIG. 1A is a side view of a seat in a folded state in a conventional technology;
FIG. 1B is a diagram of a structure of a seat in a folded state in a conventional technology;
FIG. 1C is a diagram of a seat in a folded state according to an embodiment of this application;
FIG. 1D is a diagram of a seat in an unfolded state according to an embodiment of this application;
FIG. 2 is a diagram of a structure of a first side panel according to an embodiment of this application;
FIG. 3 is a diagram in which a first side panel and a second side panel are close to each other according to an embodiment of this application;
FIG. 4 is a diagram of a structure of a first side panel according to an embodiment of this application;
FIG. 5 is a diagram of a structure of another first side panel according to an embodiment of this application;
FIG. 6 is a diagram of a structure of a seat body according to an embodiment of this application;
FIG. 7 is a side view of a slot mechanism in a seat according to an embodiment of this application;
FIG. 8 is another side view of a slot mechanism in a seat according to an embodiment of this application;
FIG. 9 is a diagram of a slot mechanism according to an embodiment of this application;
FIG. 10A is a side view of another seat in an unfolded state according to an embodiment of this application;
FIG. 10B is a diagram of a first included angle according to an embodiment of this application;
FIG. 11A is a side view of another seat in a folded state according to an embodiment of this application; and
FIG. 11B is a diagram of a second included angle according to an embodiment of this application.

Reference numerals: 10: seat; 11: side panel; 12: first side panel; 121: first accommodating portion; 1211: first bottom wall; 1212: first side wall; 122: second accommodating portion; 1221: second side wall; 123: third accommodating portion; 1231: third side wall; 13: second side panel; 131: first surface; 132: second surface; 14: backrest; 141: side bolster; 1411: lower side surface; 15: seat body; 151: first body; 152: second body; 153: slot mechanism; 1531: first portion; 1532: second portion; 16: seat cushion; 17: leg support; 171: first included angle; 172: second included angle; 18: angle adjuster; 19: adjustment button.

### DESCRIPTION OF EMBODIMENTS

In a passenger vehicle, a position and a posture of a seat may be adjusted, to improve seating experience of the vehicle. Generally, the seat in the vehicle may include an unfolded state and a folded state, and different postures may provide different effect. For example, when a rear seat is in the folded state, a larger cargo space may be provided. For a two-door four-seat vehicle, when the front seat is in the folded state, a passageway may be provided for the passenger to access the rear seat.

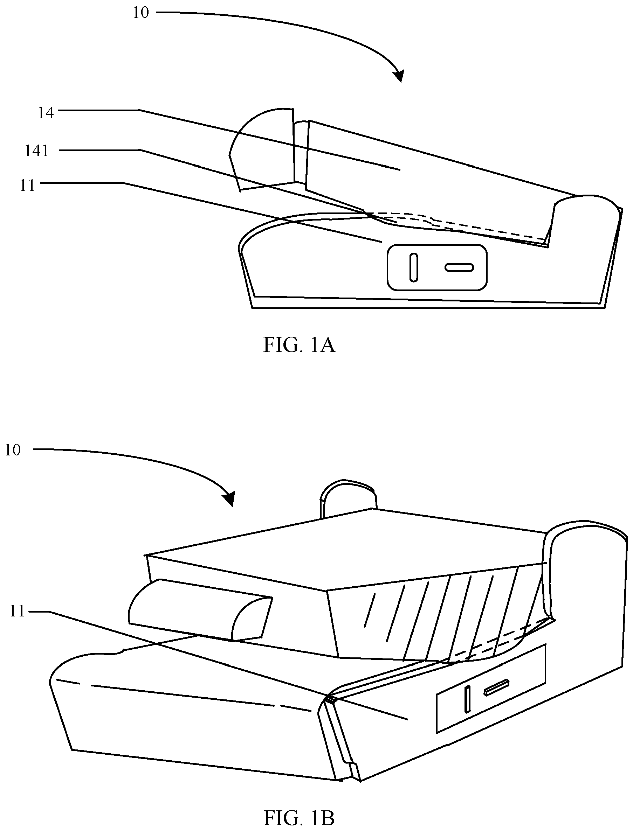

However, a current folding function of the front seat is not ideal. For details, refer to FIG. 1A and FIG. 1B. FIG. 1A is a side view of a seat in a folded state in a conventional technology. FIG. 1B is a diagram of a structure of a seat in a folded state in a conventional technology. In FIG. 1A and FIG. 1B, a side panel 11 is of an integrated structure and is disposed on a side of a seat 10. The side panel 11 is mainly configured to cover a framework of the seat 10 and provides support for a switch button mounted on the side panel 11, to improve stability and ensure comfort and safety of the passenger. In addition, the side panel 11 may also secure a position of the seat 10 and its internal components, while providing support for arms and legs of the passenger. A backrest 14 of the seat 10 of the vehicle in the current industry is designed with an ergonomically contoured shape, to provide the passenger with a sense of enclosure and lumbar support during seating. For example, a forward-protruding bulge is provided at a lumbar region of the backrest 14 to support the passenger's lower back, and side bolsters 141 or wing-shaped protrusions may extend from both sides of the backrest 14 of the seat 10 to enhance the sense of enclosure provided by the seat 10. However, when the seat 10 tilts forward or is folded, the design intended to enhance the sense of support and enclosure for the passenger during seating severely interferes with the side panels 11 disposed on both sides of the seat 10. As a result, the side panels 11 obstruct forward folding of the backrest 14 of the seat 10. In this case, the seat 10 cannot be fully laid flat.

Some vehicles are further equipped with queen seats. In a possible case, the queen seat, for example, a front passenger seat is placed in a folded state by folding a backrest of the seat forward, and the seat is moved forward, to provide a rear passenger with a larger cabin space and a broader field of view. Additionally, the seat in the folded state may serve as a support for feet or legs of the rear passenger. However, even after the backrest of the front seat is folded, there is still a large tilt angle, which severely affects the passenger's seating experience and the wideness of the field of view.

In view of this, an embodiment of this application provides a seat, to prevent a side panel from obstructing forward folding of a backrest of a seat and increase a foldable angle of the seat.

In the following, a seat of a vehicle is used as an example to describe the seat provided in this embodiment of this application. It should be noted that, in addition to the vehicle, the seat 10 provided in this application may be used in another terminal equipped with a seat, for example, a ship, an aircraft, or a manned device. Herein, the seat in the vehicle is merely used as an example for description.

In the following figures and descriptions, a specific solution is provided to address mutual interference that occurs between the side bolsters of the backrest of the seat and the side panels when the seat is folded. It may be understood that, in addition to a problem of mutual interference between the side bolsters of the backrest of the seat and the side panels, a problem of interference between another design of the backrest of the seat and the side panels may also be resolved by using the following solution.

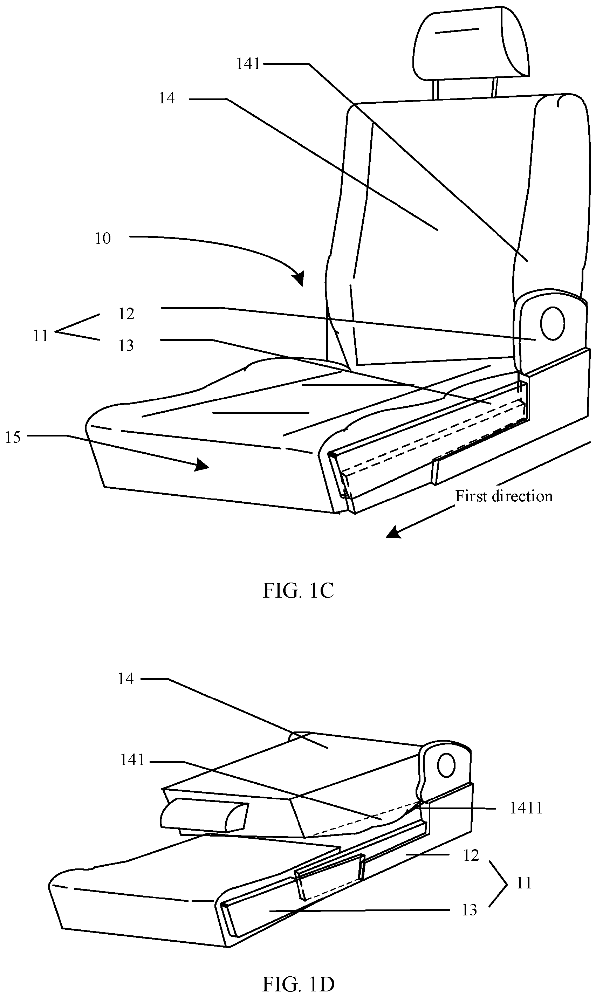

Refer to FIG. 1C and FIG. 1D. FIG. 1C is a diagram of a seat in a folded state according to an embodiment of this application. FIG. 1D is a diagram of a seat in an unfolded state according to an embodiment of this application. As shown in FIG. 1C and FIG. 1D, the seat 10 includes a side panel 11 and a backrest 14. Side bolsters 141 are provided on both sides of the backrest 14 and extend forward in an inclined manner.

The side panel 11 is disposed on one side of the seat 10, and the side herein is one of four sides of a seat cushion of the seat 10 that is adjacent to a side on which the backrest 14 is located. Optionally, there may be a plurality of side panels 11. For example, two side panels 11 are respectively disposed on two sides of the four sides of the seat cushion that are adjacent to the side on which the backrest is located.

In FIG. 1C and FIG. 1D, the side panel 11 is of a split structure, and includes a first side panel 12 and a second side panel 13. The first side panel 12 matches the second side panel 13. The matching may be understood as that contact portions of the first side panel 12 and the second side panel 13 are well-aligned or have a consistent shape. When the seat is unfolded, the first side panel and the second side panel may be spliced into a whole, and when the seat is folded, the first side panel and the second side panel may be split into two parts.

In some solutions, there is a connection relationship between the first side panel and the second side panel, and the connection relationship between the first side panel and the second side panel includes a detachable connection. The detachable connection includes but is not limited to: The first side panel and the second side panel are connected through a fastener or are slidably connected through a sliding mechanism. For example, the fastener-based connection includes a combination connection of a screw, a bolt, and a nut, and the sliding mechanism includes a combination connection of a slot and a rail.

In the description of this application, it should be noted that, unless otherwise explicitly specified and limited, terms "matching" and "connection" should be understood in a broad sense. For example, the "connection" may be a fixed connection, or may be a detachable connection, or may be an abutting connection or an integral connection. The "connection" may alternatively be a direct connection, or may be an indirect connection. A person of ordinary skill in the art may understand specific meanings of the foregoing terms in this application based on a specific situation. For example, in this application, the first side panel 12 and the second side panel 13 are indirectly connected. The indirect connection herein may be understood as that the first side panel 12 and the second side panel 13 are driven to move through their respective connections to another component, thereby implementing the indirect connection.

Optionally, there is a direct connection relationship between the first side panel 12 and the second side panel 13. For example, the first side panel 12 and the second side panel 13 are slidably connected. The following gives an example of a sliding connection manner. The first side panel 12 and the second side panel 13 are slidably connected through a slot mechanism disposed on the first side panel 12 and a rail disposed on the second side panel 13. A specific implementation of the sliding connection is not limited herein.

In this application, the first side panel 12 and the second side panel 13 can be close to or away from each other in a first direction. The first direction is a direction from a rear side to a front side of the seat 10.

It may be understood that, when the seat 10 is in the unfolded state, the first side panel 12 and the second side panel 13 are close to each other, and when the seat 10 is in the folded state, the first side panel 12 and the second side panel 13 are far away from each other, to avoid a case in which the side panel 11 obstructs forward folding of the backrest 14.

In this application, the side panel 11 is provided as a split structure. When the seat 10 is in the folded state, the first side panel 12 and the second side panel 13 in the side panel 11 are away from each other, so that an accommodation space that can accommodate the side bolster 141 of the backrest 14 exists between the first side panel 12 and the second side panel 13, thereby resolving a problem that when the seat 10 is folded, the side bolster 141 of the backrest 14 severely interferes with the side panel 11 and the side panel 11 obstructs forward folding of the backrest 14.

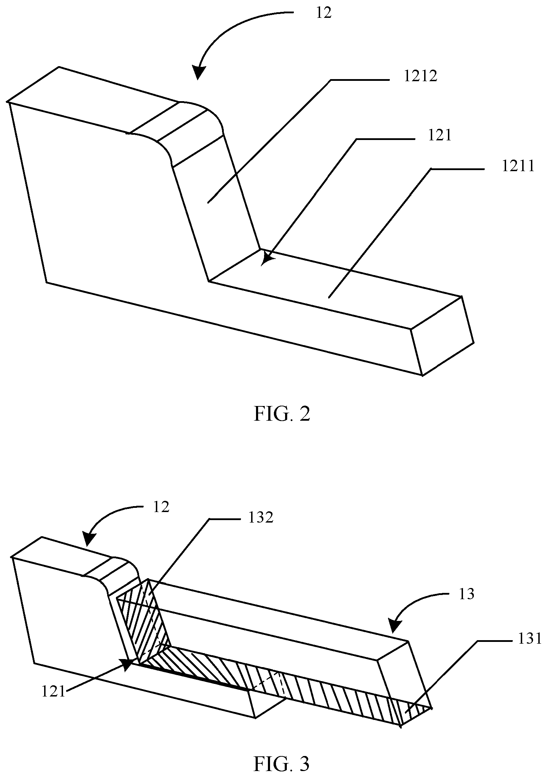

In some possible implementations, a first accommodating portion 121 is provided on the first side panel 12, and the first accommodating portion 121 is configured to accommodate the second side panel 13 or a part of the second side panel 13. For details, refer to FIG. 2. FIG. 2 is a diagram of a structure of the first side panel according to an embodiment of this application.

In FIG. 2, the first accommodating portion 121 includes a first side wall 1212 and a first bottom wall 1211, and the first side wall 1212 and the first bottom wall 1211 jointly form the first accommodating portion 121.

Optionally, when the seat 10 is in the unfolded state, at least a portion of the second side panel 13 is accommodated in the first accommodating portion 121, to ensure aesthetic and integrity of the side panel 11 when the seat 10 is in the unfolded state. Correspondingly, when the seat 10 is in the folded state, at least a portion of the second side panel 13 is detached from the first accommodating portion 121, to ensure aesthetic and integrity of the side panel 11 when the seat 10 is in the folded state.

In this embodiment of this application, the first accommodating portion 121 is further configured to accommodate the side bolster 141 of the backrest 14. When the seat 10 is in the folded state, at least a portion of the side bolster 141 of the backrest 14 is located within the first accommodating portion 121. For example, in FIG. 1D, at least a portion of the side bolster 141 of the backrest 14 is located within the first accommodating portion 121. It may be understood that when the side bolster 141 is accommodated in the first accommodating portion 121, a horizontal position of the side bolster 141 is lower, and a folding angle of the backrest 14 is larger.

Further, when the seat 10 is in the folded state, a lower side surface 1411 of the side bolster 141 of the backrest 14 faces the first side wall 1212 of the first accommodating portion 121, and the lower side surface 1411 of the side bolster 141 is parallel to the first side wall 1212, to avoid mutual impact between the lower side surface 1411 of the side bolster 141 and the first accommodating portion 121 when the seat 10 is folded, thereby improving accommodating effect.

Furthermore, the seat that needs to be folded in the foregoing queen seat configuration has a requirement on a folding angle, to provide the passenger with support for legs and feet. However, if the seat is not fully folded and the backrest cannot be laid flat, the passenger's seating experience and wideness of the field of view are affected. In this application, the first side panel 12 and the second side panel 13 are disposed separately, to provide a placement space for the side bolster 141 of the backrest 14 or another design that interferes with the side panel 11. In this way, the side panel 11 and the backrest 14 do not interfere with each other, so that the backrest 14 of the seat 10 can be laid flat, and the passenger's seating experience and wideness of the field of view are improved. In some queen seat design schemes, the passenger of the queen seat is seated in a rear seat behind the foldable seat 10, and the passenger may place feet or legs on the backrest 14 of the folded seat 10.

Furthermore, in addition to the requirement on the folding angle of the seat 10 that needs to be folded in the queen seat configuration, the seat 10 further needs to be moved forward until a portion of the seat 10 is moved beneath an armrest console, thereby providing the passenger with a larger seating space. If a problem that the backrest 14 or the side bolster 141 of the backrest 14 interferes with the side panel 11 occurs, resulting in incomplete forward folding of the backrest 14, a problem that a portion of the folded seat 10 fails to move beneath the armrest console and the seating space made for the passenger is insufficient may occur. Through the foregoing design, this application enables the seat 10 to be folded more fully, allowing a portion of the folded seat 10 to be easily moved beneath the armrest console.

Optionally, when the seat 10 is in the folded state, the lower side surface 1411 of the side bolster 141 is in contact with the first side wall 1212 of the first accommodating portion 121, or a portion of the lower side surface 1411 of the side bolster 141 is in contact with the first side wall 1212 of the first accommodating portion 121. Optionally, when the seat 10 is in the folded state, the lower side surface 1411 of the side bolster 141 is not in full contact with the first side wall 1212 of the first accommodating portion 121, and there exists a small gap.

Optionally, the lower side surface 1411 of the side bolster 141 has a same shape as the first side wall 1212, and when the seat 10 is folded, the lower side surface 1411 of the side bolster 141 does not interfere with the first side wall 1212.

During actual application, because an error exists during part processing, the lower side surface 1411 of the side bolster 141 is not perfectly parallel to the first side wall 1212, but an included angle formed between the lower side surface 1411 of the side bolster 141 and the first side wall 1212 is between +5° and -5°.

Certainly, different seats 10 are provided with side bolsters 141 of different specifications and different models. Correspondingly, different side bolsters 141 interfere with the side panel 11 at different positions. In this application, when the seat 10 is in the folded state, the first side panel 12 and the second side panel 13 are disposed separately, to provide a corresponding accommodation space for the side bolster 141, and adapt to most styles of seats 10 and side bolsters 141 of the backrest 14 of the seat 10 available on the market.

However, because lengths or widths of the side bolsters 141 of different models are different, side bolsters 141 of some models may be short in width, and cannot be accommodated in the first accommodating portion 121 when the seat 10 is in the folded state. In this case, when the seat 10 is in the folded state, at least a portion of the side bolster 141 is located above the first accommodating portion 121, namely, a placement space formed after the first side panel 12 and the second side panel 13 move away from each other. Optionally, the placement space may be a portion of a spatial location occupied by the second side panel 13 before the first side panel 12 and the second side panel 13 move away from each other, or may be a portion of a spatial location occupied by the first side panel 12 before the first side panel 12 and the second side panel 13 move away from each other.

In some possible implementations, FIG. 3 is a diagram in which the first side panel and the second side panel are close to each other according to an embodiment of this application. In FIG. 3, the second side panel 13 includes a first surface 131 and a second surface 132. When the seat 10 is in the unfolded state, the first surface 131 is in contact with the first bottom wall 1211, the second surface 132 faces the first side wall 1212, and the second surface 132 is parallel to the first side wall 1212. In FIG. 3, the second side panel 13 is a regular cuboid. However, during actual application, to adapt to different first side panels 12 or for a factor such as higher connection stability with the seat itself, the second side panel 13 may alternatively be an irregular cuboid or another irregular shape. However, it should be noted that, to ensure integrity of the side panel 11, contact surfaces of the second side panel 13 and the first side panel 12 should have a same shape. For example, the contact surfaces of the second side panel 13 and the first side panel 12 are both smooth planes.

Optionally, when the seat 10 is in the unfolded state, the second surface 132 is in contact with the first side wall 1212.

Optionally, when the seat 10 is in the unfolded state, a portion of the first surface 131 is in contact with the first bottom wall 1211.

In the foregoing implementation, the first surface and the first bottom wall are in surface contact, so that the second side panel is stably connected to the first side panel. This can prevent the second side panel from shaking, increase structural compactness of the side panel, reduce a volume of the side panel, minimize space occupied by the side panel, and help save space. The second surface and the first side wall are parallel to each other, so that a gap between the second surface and the first side wall may be minimal or even eliminated, thereby further improving structural compactness of the side panel, reducing a volume, and saving space.

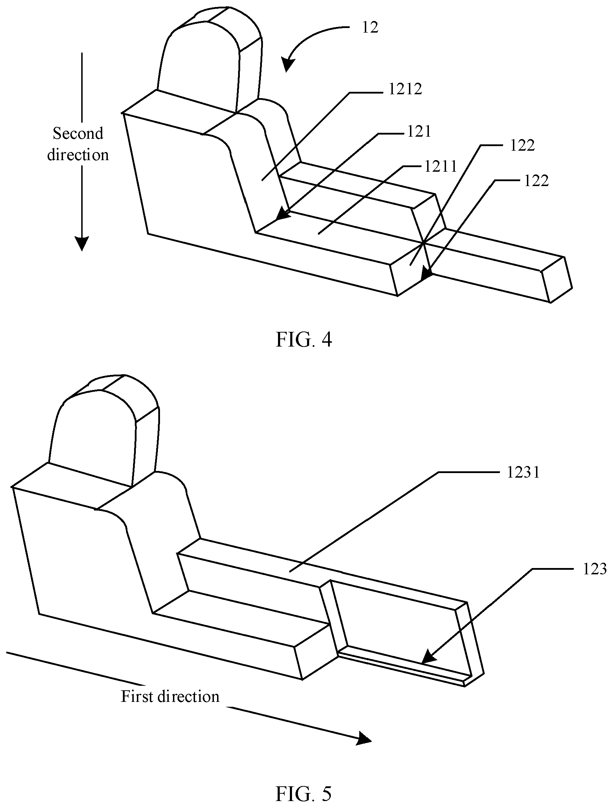

In some possible implementations, a second accommodating portion 122 is further provided on the first side panel 12. For details, refer to FIG. 4. FIG. 4 is a diagram of a structure of the first side panel according to an embodiment of this application. In FIG. 4, the first accommodating portion 121 and the second accommodating portion 122 are sequentially arranged in the first direction. A depth of the second accommodating portion 122 is greater than a depth of the first accommodating portion 121 in a second direction. The second direction is a direction from top to bottom of the seat 10. The second accommodating portion 122 includes a second side wall 1221.

In this implementation, when the seat 10 is in the folded state, at least a portion of the second side panel 13 is accommodated in the second accommodating portion 122.

Optionally, when the seat 10 is in the folded state, the second surface 132 of the second side panel 13 faces the second side wall 1221 of the second accommodating portion 122, and the second surface 132 is parallel to the second side wall 1221. Optionally, the second surface 132 is in contact with the second side wall 1221.

In the foregoing implementation, the second surface and the second side wall are parallel to each other or in contact with each other, so that a gap between the second surface and the first side wall may be minimal or even eliminated, thereby further improving structural compactness of the side panel, reducing a volume, and saving space. This ensures a matching degree between the first side panel and the second side panel when the seat is in the folded state, resulting in good aesthetics. In the folded state, a compact structure of the side panel contributes to space savings, allowing accommodation of the backrest and enabling a greater folding angle of the backrest.

In some possible implementations, to ensure stability between the first side panel 12 and the seat 10, the first side panel 12 further includes a third side wall 1231. The third side wall 1231 may be a side wall that is of the first side panel 12 and that is in contact with the seat 10. Optionally, the third side wall 1231 is a side wall with a thickness. For details, refer to FIG. 5. FIG. 5 is a diagram of a structure of another first side panel according to an embodiment of this application.

In FIG. 5, the third side wall 1231 is a side wall extending in the first direction, and a third accommodating portion 123 is provided at a front end of the seat 10. The third accommodating portion 123 is configured to accommodate at least a portion of the second side panel 13 when the seat 10 is in the folded state. A front-end space of the first side panel 12 provides clearance for the second side panel 13. Therefore, a notch is reserved at a front end of the first side panel 12 in a Y direction (which is usually a left/right direction of the seat 10). The gap may accommodate and match the movable second side panel 13, to form an integrated whole and ensure a visually appealing appearance of the seat 10. It may be understood that the third accommodating portion 123 is designed at a front segment of the third side wall 1231 to match a structure of the second side panel 13 when the seat is in the folded state. In this case, the second side panel 13 is in an irregular shape. The third accommodating portion 123 in FIG. 5 is an example. During actual application, to better match shapes of the first side panel 12 and the second side panel 13, the third accommodating portion 123 may be provided at one or more positions on the third side wall 1231.

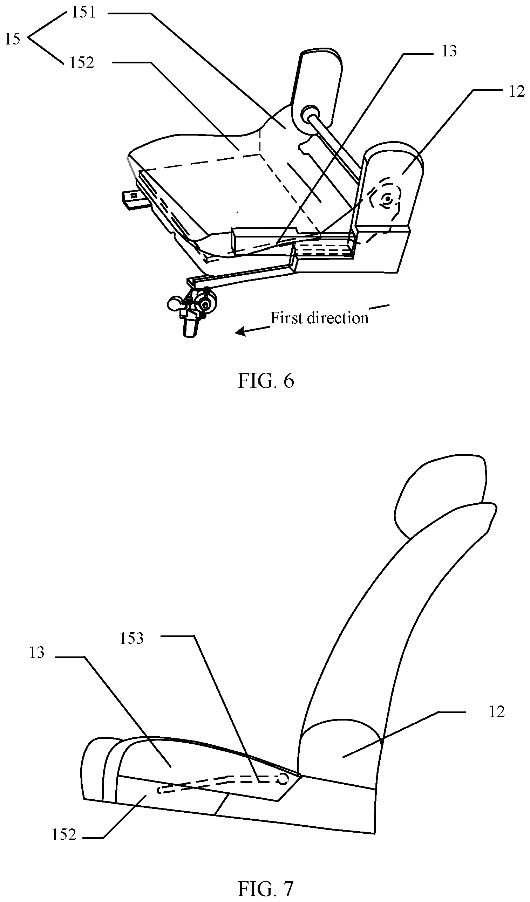

In some possible implementations, FIG. 6 is a diagram of a structure of a seat body according to an embodiment of this application. In FIG. 6, the seat body 15 includes a first body 151 and a second body 152. The first body 151 is slidably connected to the second body 152. The first body 151 and the second body 152 are capable of approaching each other or moving away from each other in the first direction. The first body 151 is fastened to the first side panel 12, and the second body 152 is fastened to the second side panel 13. Therefore, motion states of the seat body 15 in different postures of the seat 10 are similar to those of the first side panel 12 and the second side panel 13 in the side panel 11. When the seat 10 is in the unfolded state, the first body 151 and the second body 152 are close to each other. When the seat 10 is in the folded state, the first body 151 and the second body 152 are away from each other.

Optionally, the side panel 11 is disposed on one side of the seat body 15. For example, the side panel 11 includes two side panels respectively disposed on both sides of the seat body 15, or the side panel 11 is an integrally formed structural part arranged around a periphery of the seat body 15, to enclose a portion of the seat body 15.

In this embodiment of this application, when the second body 152 moves away from the first body 151, the second body 152 drives the structural part fastened to the second body 152 to move together, for example, the second side panel 13, a seat cushion, or a seat leg support.

In an implementation of this application, when the seat 10 is in the folded state, the second body 152 and the second side panel 13 move in the first direction relative to the first body 151 and the first side panel 12. In this case, the first body 151 and the first side panel 12 remain stationary relative to the seat 10, and the second body 152 and the second side panel 13 move in the first direction, to provide a corresponding placement space for the backrest 14, thereby preventing the side panel 11 from obstructing forward folding of the backrest 14.

Optionally, when the seat 10 is in the folded state, the second body 152 and the second side panel 13 move in the first direction, and the first body 151 and the first side panel 12 move in a direction opposite to the first direction.

Optionally, when the seat 10 is in the folded state, the second body 152 and the second side panel 13 remain stationary relative to the seat 10, and the first body 151 and the first side panel 12 move in a direction opposite to the first direction.

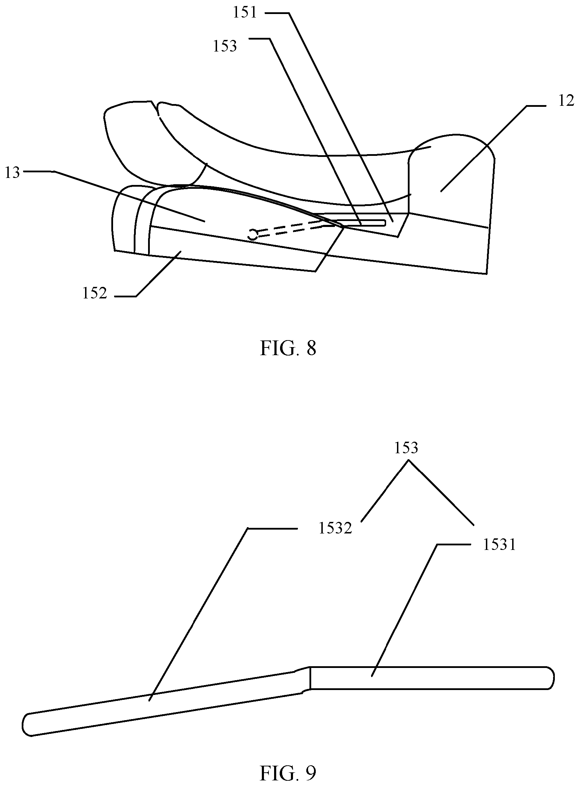

In some possible implementations, the first body 151 is provided with a slot mechanism 153, and the slot mechanism 153 is specifically a groove recessed on an upper surface of the first body 151. The second body 152 is provided with a rail, and the rail may be an elongated structure protruding on a surface of the second body 152. Alternatively, the first body 151 is provided with the rail, and the second body 152 is provided with the slot mechanism 153. An extension direction of the slot mechanism 153 is parallel to the first direction, and the rail is slidably connected to the slot mechanism 153. In an implementation of this application, the second body 152 may move in the first direction through the slot mechanism 153 or the rail, and drive the second side panel 13 fastened to the second body 152 to move together. Certainly, a moving mechanism disposed within the seat body 15 may be a mechanism other than the slot mechanism 153 and the rail, for example, a mechanism that can support movement of the first body 151 and the second body 152 in the seat body 15, such as a conveyor shaft, a conveyor belt, and a telescopic bearing. FIG. 7 is a side view of the slot mechanism in the seat according to an embodiment of this application. FIG. 8 is another side view of the slot mechanism in the seat according to an embodiment of this application. The seat 10 in FIG. 7 is in the unfolded state, the seat 10 in FIG. 8 is in the folded state, and the slot mechanism 153 in FIG. 7 and FIG. 8 is fastened to the first body.

In still some possible implementations, at least a portion of the slot mechanism 153 extends downwardly in an inclined manner in the first direction. It may be understood that at least a portion of the rail that matches the slot mechanism 153 also extends downward in an inclined manner in the first direction.

In still some possible implementations, the slot mechanism 153 includes a first portion 1531 and a second portion 1532. The first portion 1531 and the second portion 1532 are sequentially arranged in the first direction, and an extension direction of the first portion 1531 is parallel to the first direction. The second portion 1532 extends downward in an inclined manner in the first direction. For details, refer to FIG. 9. FIG. 9 is a diagram of the slot mechanism according to an embodiment of this application.

In this implementation, when the rail on the second body 152 moves to the second portion 1532 of the slot mechanism 153, the second side panel 13 that is fastened to the second body 152 moves to the second accommodating portion 122. Optionally, when the rail on the second body 152 moves to the second portion 1532 of the slot mechanism 153, the second side panel 13 that is fastened to the second body 152 moves to the second accommodating portion 122 and the third accommodating portion.

In the foregoing implementation, the first side panel 12 and the second side panel 13 approach each other or move away from each other through a moving mechanism (the slot mechanism 153 and the rail) disposed in the seat body 15. In another implementation, the first side panel 12 and the second side panel 13 may approach each other or move away from each other through another moving mechanism. For example, the slot mechanism 153 is disposed on a side of the seat body 15 facing the side panel 11, and the rail that matches the slot mechanism 153 is disposed on the first side panel 12 and the second side panel 13. In this case, movement of the first side panel 12 and the second side panel 13 may be implemented through cooperation between the slot mechanism 153 and the rail. Alternatively, a driving component is disposed below the side panel 11, and the driving component is configured to drive the first side panel 12 and/or the second side panel 13 to move, or the like.

A key of this embodiment of this application is that separation between the first side panel 12 and the second side panel 13 provides a placement space for the side bolster 141 of the backrest 14 when the seat 10 is folded. Therefore, the slot mechanism 153 and the rail provided in this application are merely examples for description, and a specific implementation of the separation between the first side panel 12 and the second side panel 13 is not limited herein.

In still some possible implementations, the seat 10 further includes a seat cushion 16. Relatively speaking, the seat cushion 16 is located at the front, while the backrest 14 is located behind the seat cushion 16. An angle adjuster/rotating shaft for adjusting a tilt angle of the backrest 14 is usually disposed at the lowermost portion of the backrest 14, and the lowermost portion of the backrest 14 is in contact with a rear end of the seat cushion 16. Therefore, when the front seat 10 is folded forward, the backrest 14 severely interferes with the seat cushion 16 and the side panel 11, hindering the seat from being laid flat. As a result, after the seat 10 is folded, there is still a large tilt angle, affecting comfort of the passenger of the queen seat.

Therefore, in this implementation, the backrest 14 is rotatably connected to the first body 151, and the seat cushion 16 is fastened to the second body 152. When the first body 151 and the second body 152 approach each other or move away from each other, the seat cushion 16 and the second body 152 move together. It may be understood that, when the seat 10 is in the folded state, the seat cushion 16 moves together with the second body 152 away from the first body 151, to avoid interference caused by the seat cushion 16 to the backrest 14 and affecting a foldable angle of the seat 10.

To ensure that when the seat 10 is folded and the backrest 14 tilts forward and is about to touch the seat cushion 16, a body of the backrest 14 is not interfered with by the seat cushion 16, and the side bolster 141 of the backrest 14 is not interfered with by the side panel 11, in some other possible implementations, the backrest 14 moves synchronously with the second body 152. That is, when the backrest 14 starts to tilt forward, the second body 152 starts to move forward in the first direction and reaches an estimated target position before the backrest 14 completes its tilting action, thereby reserving a placement space for the backrest 14 and/or the side bolster 141 of the backrest 14. The foregoing changes in motion states are used as examples. In addition to the foregoing manner in which the backrest 14 and the second body 152 move synchronously, the second body 152 may alternatively move to the estimated target position in advance before the backrest 14 starts to tilt forward.

In some possible implementations, when the seat 10 is in the folded state, an included angle between a back of the backrest 14 of the seat 10 and a horizontal plane is between +20° and -20°. Optionally, in this embodiment of this application, the foldable angle of the seat 10 is 79°. If the included angle between the back of the backrest 14 and the horizontal plane is 97° when the seat 10 is in the unfolded state, the included angle between the back of the backrest 14 and the horizontal plane is +18° when the seat 10 is in the folded state. In some solutions, 0° is an angle of the horizontal plane, with an unfolding direction of the backrest 14 as a positive angle and a folding direction of the backrest 14 as a negative angle. For example, an included angle between the back of the backrest 14 of the seat 10 and the horizontal plane is +18°, +15°, +10°, or the like. It can be learned that in this implementation of this application, the backrest 14 of the seat 10 can be highly folded, so that the passenger can use more space within the vehicle, thereby improving use experience.

A current seat 10 of the vehicle is equipped with a leg support 17. The leg support 17 is usually connected to a side that is of the seat cushion 16 of the seat 10 and that is away from the backrest 14, and is perpendicular to the horizontal plane, to support legs of the passenger in the seat 10 and improve seating comfort of the passenger. In some possible implementations of this application, the seat cushion 16 moves downward in an inclined manner in the first direction together with the second body 152, causing the leg support 17 to also move downward in an inclined manner in the first direction following the seat cushion 16. As a result, during movement of the seat cushion 16, the seat cushion 16 may abut against the vehicle floor or ground, causing the second body 152 to fail to continue moving or causing damage to the seat cushion 16.

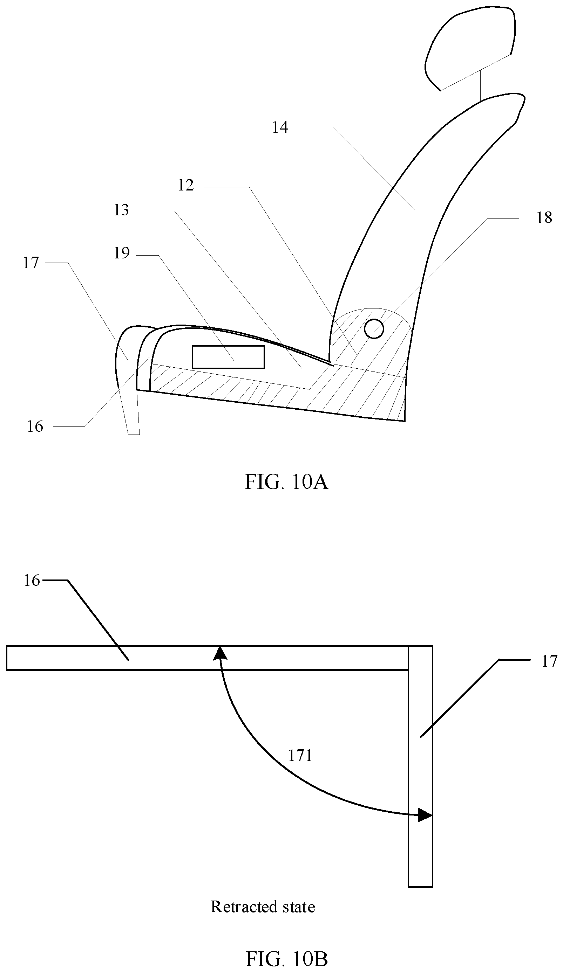

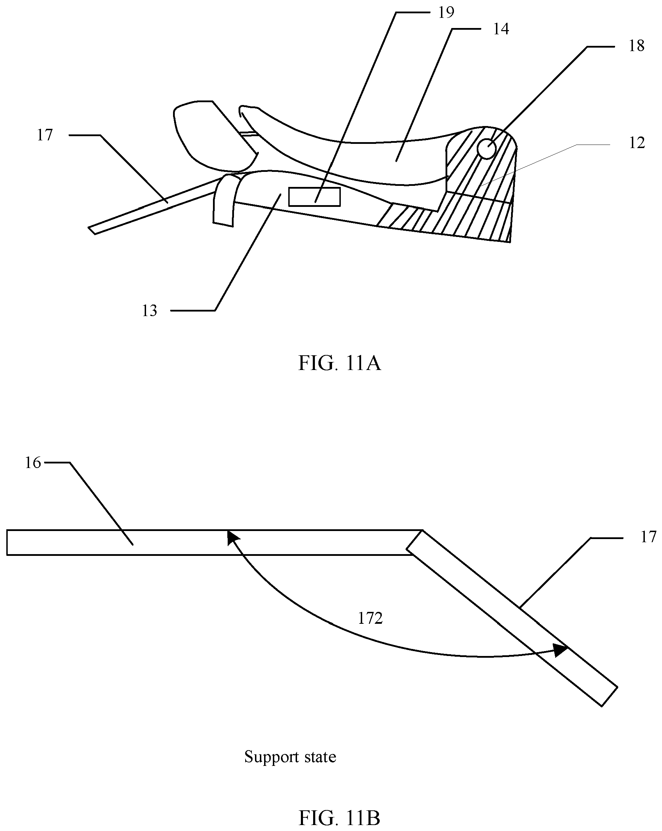

Therefore, in some possible implementations, the seat 10 further includes a leg support 17. The leg support 17 is connected to a side that is of the seat cushion 16 and that is away from the backrest 14. The leg support 17 includes a support state and a retracted state. When the leg support 17 is in the retracted state, an included angle between the leg support 17 and the seat cushion 16 is a first included angle 171. When the leg support 17 is in the support state, an included angle between the leg support 17 and the seat cushion 16 is a second included angle 172. For details, refer to FIG. 10A, FIG. 10B, FIG. 11A, and FIG. 11B. FIG. 10A is a side view of another seat in the unfolded state according to an embodiment of this application. FIG. 10B is a diagram of the first included angle according to an embodiment of this application. FIG. 11A is a side view of another seat in the folded state according to an embodiment of this application. FIG. 11B is a diagram of the second included angle according to an embodiment of this application.

In this embodiment of this application, the first included angle 171 is less than the second included angle 172.

It may be understood that, when the seat 10 is in the unfolded state, the leg support 17 is in the retracted state, and is retracted at the seat body 15. When the seat 10 is in the folded state, the leg support 17 is in the support state.

In some possible implementations, an angle adjuster 18 is disposed at the top of the first side panel 12, and the angle adjuster 18 is a mechanism for adjusting the tilt angle of the backrest 14. For example, the angle adjuster 18 may be disposed on an inner side or an outer side of the first side panel 12. The inner side is a side facing the seat body 15, while the outer side is a side facing away from the seat 10. The angle adjuster 18 may alternatively be disposed inside the first side panel 12. Correspondingly, a groove or a through hole that matches the angle adjuster 18 is provided within the first side panel 12.

In some possible implementations, a button may be disposed on the second side panel 13. As shown in FIG. 10A and FIG. 10B, an adjustment button 19 is disposed on one side of the second side panel 13. The adjustment button 19 is configured to adjust a position of the seat 10, or a tilt angle of the backrest 14 or the leg support 17. Certainly, the adjustment button 19 may alternatively be disposed on the first side panel 12.

An embodiment of this application further provides a terminal. The terminal includes the seat 10 described in the foregoing embodiment. Optionally, the terminal includes an intelligent terminal or a transportation means such as a vehicle, a robot, an uncrewed aerial vehicle, or a ship. The vehicle is a vehicle in a broad sense, and may be a commercial vehicle, a passenger vehicle, a motorcycle, a flight vehicle, a train, a special vehicle, or the like. Alternatively, optionally, the terminal includes an intelligent device including a seat, such as an electric sofa, a 4D cinema cockpit, or a massage chair.

In embodiments of this application, terms such as "example" or "for example" indicate giving an example, an illustration, or a description. Any embodiment or design scheme described as an "example" or "for example" in this application should not be construed as being more preferred or having more advantages than another embodiment or design scheme. To be specific, use of the word "example", "for example", or the like is intended to present a relative concept in a specific manner.

In embodiments of this application, "at least one" means one or more, and "a plurality of" means two or more. "At least one of the following" or similar expressions refer to any combination of these items, including any combination of single items or a plurality of items. For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects.

In addition, unless otherwise specified, ordinal numbers such as "first" and "second" are used in embodiments of this application to distinguish between a plurality of objects, but are not used to limit a sequence, a time sequence, priorities, or importance degrees of the plurality of objects. For example, the first side panel and the second side panel are merely for ease of description, but do not indicate differences in materials, installation sequences, importance degrees, and the like of the first side panel and the second side panel.

According to the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

## Claims

1. A seat, wherein the seat comprises a side panel, the side panel comprises a first side panel and a second side panel, the first side panel matches the second side panel, and the first side panel and the second side panel are capable of approaching each other or moving away from each other in a first direction, wherein the first direction is a direction from a rear side to a front side of the seat.

2. The seat according to claim 1, wherein the first side panel is provided with a first accommodating portion, and when the seat is in an unfolded state, at least a portion of the second side panel is accommodated in the first accommodating portion; or when the seat is in a folded state, at least a portion of the second side panel is detached from the first accommodating portion.

3. The seat according to claim 2, wherein the first side panel is further provided with a second accommodating portion, and the first accommodating portion and the second accommodating portion are sequentially arranged in the first direction; a depth of the second accommodating portion is greater than a depth of the first accommodating portion in a second direction, wherein the second direction is a direction from top to bottom of the seat; and when the seat is in the folded state, at least a portion of the second side panel is accommodated in the second accommodating portion.

4. The seat according to any one of claims 1 to 3, wherein the seat further comprises a seat body, the side panel is disposed on one side of the seat body, the seat body comprises a first body and a second body, the first body is slidably connected to the second body, the first body and the second body are capable of approaching each other or moving away from each other in the first direction, the first side panel is fastened to the first body, and the second side panel is fastened to the second body.

5. The seat according to claim 4, wherein the seat further comprises a seat cushion and a backrest, the backrest is rotatably connected to the first body, the seat cushion is fastened to the second body, and when the first body and the second body approach each other or move away from each other, the seat cushion moves together with the second body.

6. The seat according to claim 4, wherein the first body is provided with a slot mechanism, and the second body is provided with a rail; or the first body is provided with a rail, and the second body is provided with a slot mechanism; an extension direction of the slot mechanism is parallel to the first direction; and the rail is slidably connected to the slot mechanism.

7. The seat according to claim 6, wherein at least a portion of the slot mechanism extends downward in an inclined manner in the first direction.

8. The seat according to claim 6, wherein the slot mechanism comprises a first portion and a second portion, the first portion and the second portion are sequentially arranged in the first direction, an extension direction of the first portion is parallel to the first direction, and the second portion extends downward in an inclined manner in the first direction.

9. The seat according to claim 2 or 3, wherein the first accommodating portion comprises a first side wall and a first bottom wall, and the second side panel comprises a first surface and a second surface; and when the seat is in the unfolded state, the first surface is in contact with the first bottom wall, the second surface faces the first side wall, and the second surface is parallel to the first side wall.

10. The seat according to claim 2 or 3, wherein when the seat is in the folded state, at least a portion of a side bolster of a backrest of the seat is located within the first accommodating portion.

11. The seat according to claim 10, wherein a lower side surface of the side bolster of the backrest faces a first side wall of the first accommodating portion, and the lower side surface of the side bolster is parallel to the first side wall.

12. The seat according to claim 9, wherein when the seat is in the folded state, the second surface faces a second side wall of the second accommodating portion, and the second surface is parallel to the second side wall.

13. The seat according to any one of claims 1 to 3, wherein when the seat is in the folded state, an included angle between a back of the backrest of the seat and a horizontal plane is between +20° and -20°.

14. The seat according to any one of claims 1 to 3, wherein the seat further comprises a leg support, and the leg support is connected to a side that is of a seat cushion and that is away from the backrest; the leg support comprises a support state and a retracted state; when the leg support is in the retracted state, an included angle between the leg support and the seat cushion is a first included angle; and when the leg support is in the support state, an included angle between the leg support and the seat cushion is a second included angle, and the first included angle is less than the second included angle.

15. A terminal, comprising the seat according to any one of claims 1 to 14.
